Europäisches Patentamt

(19) European Patent Office

Office européen des brevets

(11) Publication number: **0 239 398**
**B1**

## (12) EUROPEAN PATENT SPECIFICATION

(45) Date of publication of the patent specification:
**26.07.89**

(21) Application number: **87302612.4**

(22) Date of filing: **26.03.87**

(51) Int. Cl.⁴: **B23D 25/12**

(54) **Cutting machine for decorative chains.**

(30) Priority: **28.03.86 JP 45690/86 U**

(43) Date of publication of application:
**30.09.87 Bulletin 87/40**

(45) Publication of the grant of the patent:
**26.07.89 Bulletin 89/30**

(84) Designated Contracting States:
**CH DE FR GB IT LI**

(56) References cited:
**DE-A- 2 635 235**
**GB-A- 1 531 790**
**JP-Y-58 011 470**

(73) Proprietor: **Suzuki, Hideya, 31-2 Minami-cho 2-chome,
Warabi-shi Saitama-ken(JP)**

(72) Inventor: **Suzuki, Hideya, 31-2 Minami-cho 2-chome,
Warabi-shi Saitama-ken(JP)**

(74) Representative: **Sheader, Brian N. et al, ERIC POTTER &
CLARKSON 27 South Street, Reading Berkshire,
RG1 4QU(GB)**

## Description

This invention relates to a cutting machine for decorative chains and particularly to machines for cutting the surfaces of chains by means of a diamond cutting tool or a carbide cutting tool to provide a decorative effect when the chain is used e.g., for a necklace or bracelet.

A conventional cutting machine of this type has a groove in the peripheral surface of a stationary guide wheel, and cuts the outer surface of a chain by a cutting tool mounted to face outwardly on a disc-like holder while feeding the chain in the groove of the guide wheel. In such a conventional cutting machine, there arises the drawback that a wavy cutting scar occurs on the surface of the chain due to the difference between the rotating speed of the cutting tool and the product feeding speed, and this makes it difficult to provide a desirable mirror-polish finish to the surface of the chain.

To this end, as disclosed in Japanese Utility Model Publication No. 11470/1983, the inventor succeeded in eliminating the abovementioned drawback by forming the groove of the stationary guide wheel in a spiral shape, mounting the cutting tool to face inwardly and forming the spiral groove with a linear portion opposed to the cutting tool. However, this machine needs stationary guide wheels of different groove sizes for workpieces of different sizes, so that it is necessary to change the guide wheel every time a chain of different size is to be cut. This invention contemplates to obviate this drawback.

An object of this invention is to provide a cutting machine for decorative chains which can finish the chains in a mirror-polished state without cutting scars.

Another object of this invention is to provide a cutting machine for decorative chains which obviates the need to change the guide wheel when a chain of different size is to be worked and which can cut the chains to a higher quality than conventional machines.

The present invention provides a cutting machine for a decorative chain comprising a cutting tool inwardly mounted on the outer end of a cutting tool holder attached to a rotational shaft, a guide wheel having a spiral groove formed in the peripheral surface thereof for receiving said chain, elevating means for raising and lowering the guide wheel towards and away from an upper cutting position, tension rolls and feed rolls mounted on opposite sides of the guide wheel, and a spring for applying tension to the tension rolls, characterised in that at least one opposed side surface of the spiral groove is movable axially of the guide wheel to vary the width of the spiral groove.

Preferably the spiral groove has a linear portion at an upper part of the guide wheel opposite the cutting tool.

The guide wheel may comprise a guide wheel portion the outer surface of which defines the bottom of the spiral groove and opposed guide wheel portions which define the opposed side surfaces of the spiral groove. One of the guide wheel portions providing said movable side surface may be movable axially of the guide wheel by screw means. The screw means may comprise first screw means for moving the guide wheel portion in one axial direction and second screw means for moving the guide wheel portion in the other axial direction. The guide wheel may be mounted on a shaft carried by the vertically movable member of the elevating means and the screw means comprise bolts which are threaded through the member and abut the guide wheel portions and bolts which extend freely through the member and are threaded into the guide wheel portion.

The cutting tool holder may comprise a pair of opposed radially-extending arms, one of said arms having an inward axial extension at the outer end thereof on which the cutting tool is mounted so as to extend radially inwards and the other of said arms having counterbalance means at the outer end thereof.

Since the width of the spiral groove for receiving the chain to be worked can be regulated according to the size of the workpiece, i.e., the thickness of the chain, cutting can be executed after simply regulating the width of the groove of the guide wheel, thus avoiding the necessity to exchange the guide wheel for one having the width of the groove therein matched to the chain to be cut as has previously been the case. Therefore, it is not necessary to prepare a large number of guide wheels having different groove sizes. Moreover, since one of the roll pairs for moving the chain is always under spring tension, the chain does not displace nor dance during the cutting step, thereby cutting the chain more accurately and to a better quality.

The invention will be more particularly described with reference to the accompanying drawings, in which:-

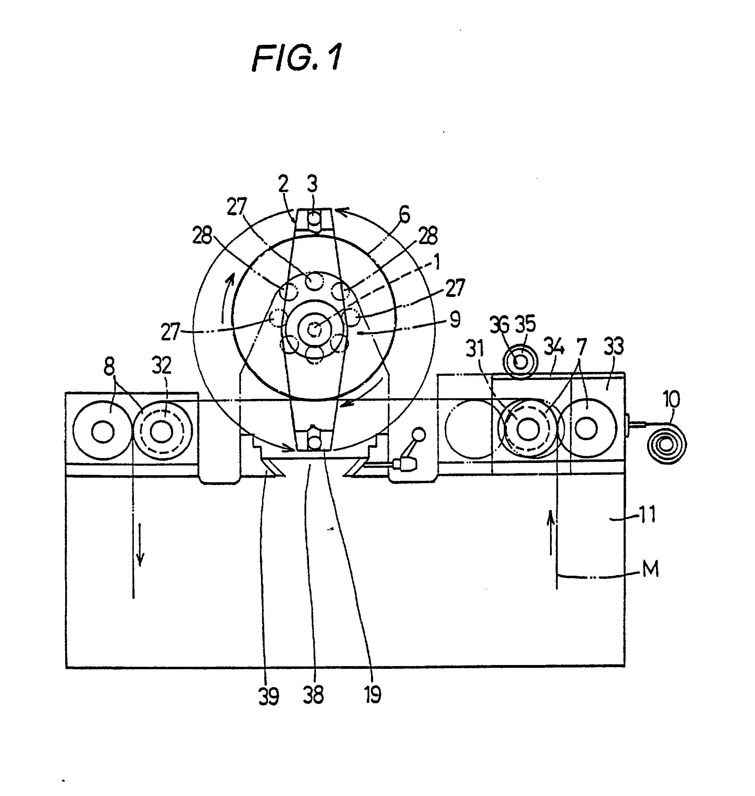

Figure 1 is a front view showing an embodiment of a cutting machine for decorative chains according to the present invention.

Figure 2 is a longitudinal fragmentary side view of the cutting machine.

Figure 3 is an exploded perspective view of the essential portion of the machine; and

Figure 4 is a developed view of the guide wheel.

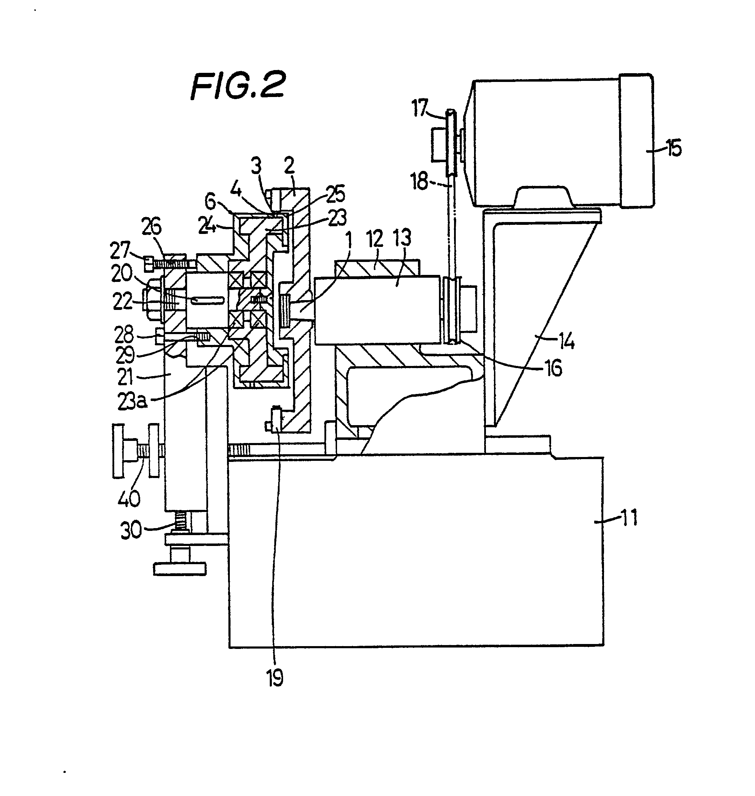

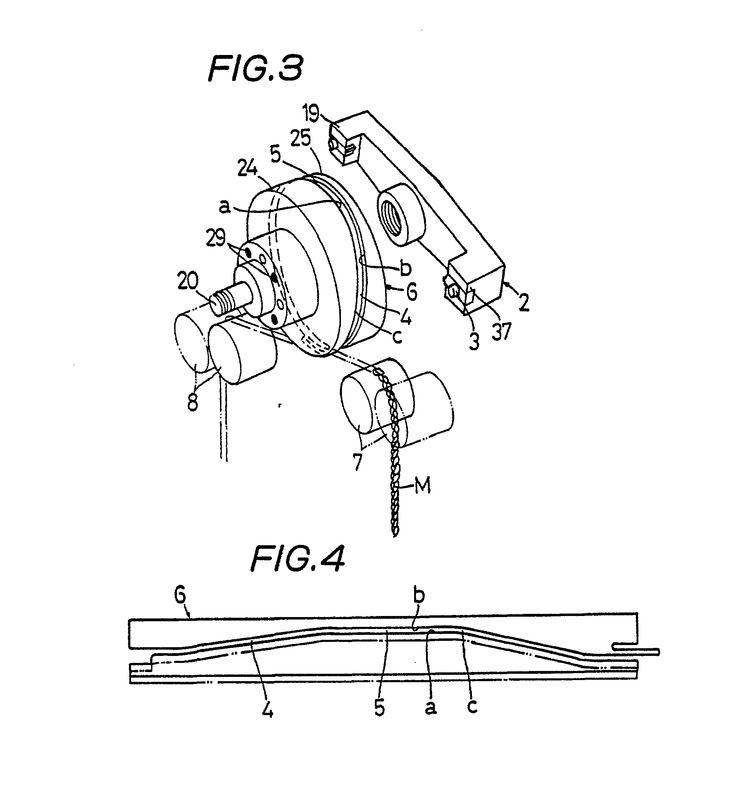

Referring to the drawings, a rotational shaft 1 on which is mounted a cutting tool holder 2 is provided in a spindle 13 supported by a bearing unit 12 provided on a machine base 11, and rotated by a motor 15 through a belt 18 engaged between a pulley 16 rotatably attached to the shaft 1 and a pulley 17 attached to the shaft of the motor 15. Motor 15 is mounted on a frame 14 which itself is mounted on the base 11. The tool holder 2 is of bar-like form having a pair of opposed radially-extending arms and is remarkably lighter than the conventional disc type tool holder, whereby it is reduced in size, durable at high speed rotation, and readily handled. One arm of the tool holder 2 has at its outer end an inward axial extension 37 on which a cutting tool 3 is interchangeably mounted so as to extend radially inwards. The other arm of the tool holder 2 has at its outer end a counterbalance 19. A guide wheel 6 is pivotally secured to a shaft 22 which is attached through a key 20 to elevating means comprising a vertically movable member 21, and rotatably supported by a bearing 23a of a guide wheel portion 23 the outer surface of which forms the bottom c of the spiral groove 4 and is rotated by the chain M therein. The guide wheel 6 of this example has an axially movable guide wheel portion 24 at the front side and a fixed guide wheel portion 25 at the rear side in such a manner that the opposed surfaces of the members 24 and 25 define the side surface a and the side surface b of the spiral groove 4. The guide wheel portion 24 is movable by a mechanism 9 having a plurality of bolts 27, 28 attached to the member 21 of the elevating means. One set of bolts 27 are engaged with threaded openings 26 in the member 21 and abut against the end of the guide wheel portion 24, and the other set of bolts 28 extend freely through the member 21 and are engaged with the threaded openings 29 formed in the guide wheel portion 24, thereby regulating the width of the groove 4. A regulating screw 30 is provided for moving the member 21. The guide wheel 6 is adjacent the cutting tool 3 at the upper part thereof as shown in Figure 2 and the groove 4 has a linear portion 5 disposed opposite the cutting tool 3. (Figure 3).

Tension rolls 7, 7 and feed rolls 8, 8 are provided at the inlet and feeding sides of the guide wheel 6, the chain M to be worked extending from between the rolls 7,7 around the spiral groove 4 and between the rolls 8, 8. The tension rolls 7, 7 are entirely tensioned by a spring 10 to apply tension to a chain M to be cut. The one rolls of the roll pairs 7, 7 and 8, 8 are driven by motors 31, 32. If the speed of the feed rolls 8 alters for any reason, the tension rolls 7 are supported by the spring 10. Thus, the tension rolls 7 can move to rotate a gear 35 engaged with a rack 34 provided in a unit case 33, thereby operating a variable voltage transformer (Slidac, trade name) 36 for operating the feed rolls 8 to synchronize with the rotating speeds of both the motors 31, 32. The machine also has a cutting tool support 37 provided at the tool holder, a leg-like rail laid on the base, a dovetail groove 39 formed at the bearing unit 12, and a positioning screw 40 for the tool holder 2.

In the cutting machine for decorative chains of the invention, constructed as described above, the guide wheel portion 24 providing the side surface a of the spiral groove 4 is axially movable by the mechanism 9. Thus, the cutting machine has a structure for regulating the width of the groove 4 in response to the size of the chain M, i.e., the width of the chain. Therefore, the chain can be accurately located by the groove 4 of the guide wheel 6. Since tension is always applied to the chain M by the spring 10 through the tension rolls 7, 8, the rolls 7, 7 and 8, 8 for feeding the chain M to the cutting position are not displaced nor danced during the cutting step.

Since the width of the spiral groove 4 for locating the chain M can be regulated if the size of the workpiece, i.e., the thickness of the chain M, is altered in the cutting machine of the invention, the cutting of different size chains can be executed simply by regulating the width of the groove 4 of the guide wheel 6. Thus, it is not necessary to exchange the guide wheel for one having the width of the groove matched to the chain to be cut as in the conventional cutting machine, and it is also not necessary to prepare a large number of guide wheels having different groove sizes. Since one of the roll pairs 7, 7 and 8, 8 for moving the chains is always under tension by the spring 10, the chains do not displace nor dance during the cutting step, thereby cutting the chains more accurately to give better quality.

**Claims**

1. A cutting machine for a decorative chain (M) comprising a cutting tool (3) inwardly mounted on the outer end of a cutting tool holder (2) attached to a rotational shaft (1), a guide wheel (6) having a spiral groove (4) formed in the peripheral surface thereof for receiving said chain (M), elevating means (21, 30) for raising and lowering the guide wheel (6) towards and away from an upper cutting position, tension rolls (7) and feed rolls (8) mounted on opposite sides of the guide wheel (6), and a spring (10) for applying tension to the tension rolls (7), characterised in that at least one opposed side surface (a, b) of the spiral groove (4) is movable axially of the guide wheel (6) to vary the width of the spiral groove (4).

2. A cutting machine according to claim 1, wherein the spiral groove (4) has a linear portion (5) at an upper part of the guide wheel (6) opposite the cutting tool (3).

3. A cutting machine according to claim 1 or 2, wherein the guide wheel (6) comprises a guide wheel portion (23) the outer surface of which defines the bottom (c) of the spiral groove (4) and opposed guide wheel portions (24, 25) which define the opposed side surfaces a, b) of the spiral groove (4).

4. A cutting machine according to claim 3, wherein the guide wheel portion (24) is movable axially of the guide wheel (6) by screw means (27, 28).

5. A cutting machine according to claim 4, wherein the screw means (27, 28) comprise first screw means (27) for moving the guide wheel portion (24) in one axial direction and second screw means (28) for moving the guide wheel portion (24) in the other axial direction.

6. A cutting machine according to claim 5, wherein the guide wheel (6) is mounted on a shaft (22) carried by the vertically movable member (21) of the elevating means (21, 30) and wherein the screw means (27, 28) comprises bolts (27) which are threaded through the member (21) and abut the guide wheel portion (24) and bolts (28) which extend freely through the member (21) and are threaded into the guide wheel portion (24).

7. A cutting machine according to any one of claims 3 to 6, wherein the guide wheel portion (25) is fixedly secured to the guide wheel portion (23).

8. A cutting machine according to any one of the preceding claims, wherein the cutting tool holder (2) comprises a pair of opposed radially-extending arms, one of said arms having an inward axial extension (37) at the outer end thereof on which the cutting tool (3) is mounted so as to extend radially inwards and the other of said arms having counterbalance means (19) at the outer end thereof.

## Revendications

1. Machine de taillage pour une chaîne décorative (M), comportant un outil de taille (3) monté vers l'intérieur sur l'extrémité extérieure d'un porte-outil de taille (2) monté sur un arbre tournant (1), une roue de guidage (6) sur la surface périphérique de laquelle est formée une gorge spirale (4) pour recevoir la chaîne (M), des moyens de levage (21, 30) pour lever la roue de guidage (6) en direction d'une position supérieure de taillage et pour abaisser cette roue en l'éloignant de cette position supérieure, des galets de tension (7) et des galets d'avancement (8) montés de part et d'autre de la roue de guidage (6), et un ressort (10) pour exercer une traction sur les galets de tension (7), caractérisée en ce qu'au moins une surface latérale opposée (a, b) de la gorge spirale (4) peut être déplacée selon l'axe de la roue de guidage (6) pour faire varier la largeur de la gorge spirale (4).

2. Machine de taillage selon la revendication 1, dans laquelle la gorge spirale (4) a une portion rectiligne (5) au niveau de la partie supérieure de la roue de guidage (6) en vis-à-vis de l'outil de taille (3).

3. Machine de taillage selon la revendication 1 ou 2, dans laquelle la roue de guidage (6) comprend une portion de roue de guidage (23) dont la surface extérieure définit le fond (c) de la gorge spirale (4), et des portions de roue de guidage opposées (24, 25) qui définissent les surfaces latérales en vis-à-vis (a, b) de la gorge spirale (4).

4. Machine de taillage selon la revendication 4, dans laquelle la portion de roue de guidage (24) peut être déplacée selon l'axe de la roue de guidage (6) par des moyens de vis (27, 28).

5. Machine de taillage selon la revendication 4, dans laquelle les moyens de vis (27, 28) comportent des premiers moyens de vis (27) pour déplacer la portion de roue de guidage (24) dans une première direction axiale et des deuxièmes moyens de vis (28) pour déplacer la portion de roue de guidage (24) dans l'autre direction axiale.

6. Machine de taillage selon la revendication 5, dans laquelle la roue de guidage (6) est montée sur un arbre (22) porté par l'élément verticalement mobile (21) des moyens de levage (21, 30) et dans laquelle les moyens de vis (27, 28) sont des boulons (27) qui sont vissés à travers l'élément (21) et viennent en butée contre la portion de roue de guidage (24) et des boulons (28) qui s'étendent librement à travers l'élément (21) et sont vissés dans la portion de roue de guidage (24).

7. Machine de taillage selon l'une quelconque des revendications 3 à 6, dans laquelle la portion de roue de guidage (25) est solidarisée de la portion de roue de guidage (23).

8. Machine de taillage selon l'une quelconque des revendications précédentes, dans laquelle le porte-outil de taille (2) comporte deux bras radiaux opposés, l'un de ces bras ayant, au niveau de son extrémité extérieure, un prolongement axial dirigé vers l'intérieur (37) sur lequel est monté l'outil de taille (3) de façon à s'étendre radialement vers l'intérieur, et l'autre bras portant, au niveau de son extrémité extérieure, des moyens d'équilibrage (19).

## Patentansprüche

1. Schneidevorrichtung für eine Schmuckkette (M) mit einem nach innen weisenden, am Außenende eines Halters (2) für das Schneidewerkzeug, der an einer Drehwelle (1) befestigt ist, montierten Schneidewerkzeug (3), einem Führungsrad (6) mit einer in seiner Umfangsfläche ausgebildeten, spiralförmigen Nut (4) zur Aufnahme der Kette (M), einer Hebeeinrichtung (21, 30) zum Anheben und Absenken des Führungsrades (6) in Richtung auf eine obere Schneideposition und von der oberen Schneideposition weg, Spannrollen (7) und Zufuhrrollen (8), die an gegenüberliegenden Seiten des Führungsrades (6) montiert sind, und einer Feder (10) zum Anlegen einer Spannung an die Spannrollen (7), dadurch gekennzeichnet, daß wenigstens eine der sich gegenüberliegenden Seitenflächen (a, b) der spiralförmigen Nut (4) in axialer Richtung des Führungsrades (6) bewegbar ist, um die Breite der spiralförmigen Nut (4) zu ändern.

2. Schneidevorrichtung nach Anspruch 1, bei der die spiralförmige Nut (4) einen linearen Bereich (5) an einem oberen Bereich des Führungsrades (6) aufweist, der dem Schneidewerkzeug (3) gegenüberliegt.

3. Schneidevorrichtung nach Anspruch 1 oder 2, bei der das Führungsrad (6) einen Führungsradbereich (23), dessen Außenfläche den Boden (c) der spiralförmigen Nut (4) bestimmt, und sich gegenüberliegende Führungsradbereiche (24, 25) aufweist, die die sich gegenüberliegenden Seitenflächen (a, b) der spiralförmigen Nut (4) bestimmen.

4. Schneidevorrichtung nach Anspruch 3, bei der der Führungsradbereich (24) in der axialen Richtung des Führungsrades (6) durch eine Schraubeneinrichtung (27, 28) bewegbar ist.

5. Schneidevorrichtung nach Anspruch 4, bei der die Schraubeneinrichtung (27, 28) eine erste Schraubeneinrichtung (27) zur Bewegung des Führungsradbereiches (24) in einer axialen Richtung und eine zweite Schraubeneinrichtung (28) zur Bewegung des Führungsradbereiches (24) in der anderen axialen Richtung aufweist.

6. Schneidevorrichtung nach Anspruch 5, bei der das Führungsrad (6) auf einer Welle (22) montiert ist, die von dem vertikal bewegbaren Teil (21) der Hebeeinrichtung (21, 30) gehalten wird und bei der die Schraubeneinrichtung (27, 28) Schrauben (27), die durch das Teil (21) geschraubt sind und an dem Führungsradbereich (24) anliegen, und Schrauben (28) aufweist, die sich frei durch das Teil (21) erstrecken und in den Führungsradbereich (24) eingeschraubt sind.

7. Schneidevorrichtung nach einem der Ansprüche 3 bis 6, bei der der Führungsradbereich (25) fest an dem Führungsradbereich (23) befestigt ist.

8. Schneidevorrichtung nach einem der vorangehenden Ansprüche, bei der der Halter (2) für das Schneidewerkzeug ein Paar von sich gegenüberliegenden, in radialer Richtung erstreckenden Armen aufweist, wobei einer dieser Arme eine sich nach innen erstreckende axiale Verlängerung (37) an seinem äußeren Ende aufweist, auf der das Schneidewerkzeug (3) so befestigt ist, daß es sich radial nach innen erstreckt, und wobei der andere der Arme an seinem äußeren Ende ein Ausgleichsgewicht (19) aufweist.

# FIG. 1

# FIG.2

## FIG.3

## FIG.4